# EUROPÄISCHE PATENTSCHRIFT

(11) **EP 1 344 866 B1**
(45) Veröffentlichungstag und Bekanntmachung des Hinweises auf die Patenterteilung: **15.10.2008**
(21) Anmeldenummer: 03450125.4
(22) Anmeldetag: 08.07.1997
(51) Int. Cl.: D21H 19/54

(54) **Beschichtungsmittel**
Coating agent
Agent de couchage

(30) Priorität: 12.08.1996 AT 144496
(43) Veröffentlichungstag der Anmeldung: 17.09.2003
(62) Teilanmeldung aus: 97890129.6
(73) Patentinhaber: Südzucker Aktiengesellschaft Mannheim/Ochsenfurt, 68165 Mannheim (DE)
(72) Erfinder: Grüll, Dietmar, 3442 Langenschönbichl (AT); Wastyn, Marnik-Michel, 2320 Schwechat (AT)
(74) Vertreter: Sonn & Partner Patentanwälte

(56) Entgegenhaltungen:
- EP-A- 0 041 842
- EP-A- 0 737 777
- WO-A-96/31650
- WO-A-97/04167
- DE-A- 1 767 698
- DE-A- 3 048 026
- DE-A- 3 920 356
- GB-A- 1 107 374
- US-A- 4 375 535

## Beschreibung

Gegenstand der vorliegenden Erfindung ist ein Pigmentierungs- und/oder Streichungsmittel für Papier, Karton und Pappe, das aus einem Gemisch von Pigmenten, einem Bindemittel auf der Basis von Stärke und verschiedenen Hilfsmitteln in wässrigem Medium besteht.

Beschichtungsmittel werden in der Papierindustrie bei der Oberflächenpigmentierung oder beim Streichen von Papier, Karton und Pappe eingesetzt. Sie dienen zur Oberflächenverbesserung, als papierfestigende Mittel, filmbildende Mittel, Mittel zur Unterbindung des Staubens und dergl.

Um die Oberflächenrauigkeit, die sich beim Bedrucken des Papiers störend auswirkt, zu beseitigen, werden Papiere und Kartons häufig gestrichen oder pigmentiert. Darunter versteht man das ein- oder beidseitige Aufbringen einer Streichfarbe, die aus einem Gemisch von Pigmenten, Bindemitteln (Stärke) und verschiedenen Hilfsmitteln in wässrigem Medium besteht. Die dadurch erzielte Abdeckung und Ausgleichung der Papieroberfläche führt zu einer Erhöhung der Glätte, des Glanzes und der Weiße des Papiers, vor allem aber wird die Bedruckbarkeit bei allen gängigen Druckverfahren entscheidend verbessert.

In den oben genannten Beschichtungsmitteln ist es wegen der hohen Viskosität der verkleisterten Stärke nicht möglich, große Mengen nativer, nicht abgebauter Stärke oder von Stärkederivaten einzusetzen. Daher ist eine partielle Depolymerisation der Stärke notwendig. Die Depolymerisation der Stärke wird üblicherweise durch oxidativen, thermischen, thermochemischen, säurekatalytischen Abbau oder sehr häufig durch ein oder mehrere enzymatische Verfahrensschritte oder eine Kombination hievon erreicht. Mit steigendem Abbau der Stärkemoleküle werden andererseits aber die gewünschten Eigenschaften, wie z.B. Bindekraft, zunehmend geschwächt. Unabhängig davon ist es ein Nachteil, daß die Viskosität der aus diesen depolymerisierten Stärken hergestellten Kleister nicht stabil ist. Die Viskosität der Kleister steigt bei Abkühlung und in Abhängigkeit von der Zeit mehr oder weniger stark an. Dieser Effekt ist auf die Retrogradation der vorhandenen Amylose zurückzuführen. Zusätzlich zur unangenehmen Erhöhung der Viskosität entstehen während der Beschichtung von Papier häufig störende Ablagerungen auf der Leim- oder Filmpresse sowie am Streichkopf durch ausgefallene Amylosekristalle.

Um das Phänomen der Retrogradation von Amylose zu umgehen, wurden bisher häufig depolymerisierte, veresterte oder veretherte Stärkederivate, die eine geringere Retrogradationsneigung aufweisen, in das Beschichtungsmittel aufgenommen. Weiters ist es möglich, durch Zusatz von bestimmten Additiven die Stärkelösung viskositätsstabiler zu machen. Allerdings ist die Einstellung der optimalen Derivatisierung der Stärke aufwendig und die Herstellung solcher Produkte meistens umweltschädigend. Der Zusatz von Hilfsmitteln führt zu komplexeren und damit schwieriger handhabbaren Beschichtungsmitteln.

Natürliche Stärken haben in der Regel einen Amylosegehalt von 15 % bis 30 % in Abhängigkeit von der Pflanzenart, aus der sie gewonnen werden. Stärke mit einem hohen Amylopektingehalt wird derzeit aus den sogenannten "waxy" Mutanten von Reis, Sorghum, Gerste und hauptsächlich Mais gewonnen. Wachsmaisstärke ist bei weitem die wichtigste Getreidestärke des Typus "waxy". Allerdings ist der Anbau von Wachsmais, aus dem die Wachsmaisstärke gewonnen wird, in Ländern mit kaltem oder temperiertem Klima, wie in Österreich, Deutschland, Belgien, den Niederlanden, Großbritannien, Polen usw., wirtschaftlich wenig sinnvoll bzw. unmöglich. Dagegen ist der Anbau von Kartoffeln in diesen Ländern wesentlich günstiger. Bedingt durch die Eigenschaften und den relativ hohen Preis der Wachsgetreidestärken liegt deren Einsatzgebiet hauptsächlich im Lebensmittelbereich.

Es sind Verfahren bekannt, um auf physikalisch-chemischem Weg den Amylosegehält von Kartoffelstärke herabzusetzen. Der Aufwand hiefür ist jedoch beträchtlich und kann nur betrieben werden, wenn wirtschaftliche Gesichtspunkte es erlauben.

Um die chemischen Methoden der Trennung von Amylose und Amylopektin zu umgehen, bestanden in letzter Zeit intensive Bemühungen, Kartoffelpflanzen so zu modifizieren, dass die von diesen Pflanzen produzierte Stärke einen höheren Amylopektingehalt im Verhältnis zu üblicher Kartoffelstärke aufweist. Tatsächlich ist es gelungen, durch gentechnische Eingriffe eine solche Veränderung im Genom der Kartoffel zu erzielen, sodass die gebildete Stärke nur mehr geringe Mengen an Amylose enthält. Die Stärke, die aus in dieser Hinsicht gentechnisch veränderten Kartoffeln gewonnen wird, besteht überwiegend aus Amylopektin. Eine stärke mit einem im Verhältnis zu gewöhnlicher Stärke deutlich verminderten Amylosegehält wird als Amylopektin-Stärke bezeichnet.

In der EP-A1 0 703 314 (AVEBE) wird die Verwendung von Amylopektin-Kartoffelstärke in kationischer Form bei der Masseherstellung von Papier vorgeschlagen. Außer auf diesem Gebiet der Papierherstellung ist im technischen Bereich keine Verwendung der aus gentechnisch veränderten Kartoffeln gewonnenen Amylopektin-Stärke bekannt.

Die vorliegende Erfindung beschäftigt sich nun mit einem neuen Anwendungsbereich für Amylopektin-Kartoffelstärke, in welchem die günstigen Eigenschaften dieser Stärke zu besonderen Produktvorteilen führen.

Erfindungsgemäß sind die neuen Pigmentierungs- und/oder Streichungsmittel für Papier, Karton und Pappe, die aus einem Gemisch von Pigmenten, einem Bindemittel auf Basis von Stärke und verschiedenen Hilfsmitteln in wässrigem Medium bestehen, dadurch gekennzeichnet, dass die Stärke aus durch Pflanzenveränderungen zur Unterdrückung der Amylosebildung gewonnenen Kartoffeln stammt.

Überraschenderweise zeigen die neuen Mittel nicht nur vorteilhaftere betriebstechnische Eigenschaften als die Mittel auf Basis von Standard-Stärke, sondern es sind auch die damit erhaltenen Papier-, Karton- und Pappeprodukte in vieler Hinsicht verbessert. Außerdem bietet die Herstellung der neuen Mittel in ökologischer und wirtschaftlicher Hinsicht zahlreiche Vorteile. Günstig ist es, wenn die verwendete Kartoffelstärke einen Amylosegehalt von weniger als 20 %, vorzugsweise von 0 % bis 8 %, insbesondere von 0 % bis 3 % aufweist.

Ein Mittel mit einem Gehalt an einer Amylopektin-Stärke in nativer, abgebauter und/oder derivatisierter Form, die aus Kartoffeln gewonnen wird, die im Hinblick auf die Produktion von Amylopektin-Stärke gentechnisch verändert wurden, ist eine besonders vorteilhafte Ausführungsform der vorliegenden Erfindung. Jedoch kann jede Amylopektin-Stärke, die durch andere Pflanzenveränderungen zur Unterdrückung der Amylosebildung gewonnen wird, ebenso eingesetzt werden.

Die physikalischen Eigenschaften des Amylopektins sind besonders günstig. So ergeben zum Beispiel Kleister aus nativer Amylopektin-Kartoffelstärke sehr klare und viskostabile Stärkelösungen. Im Zuge der Forschungen auf diesem Gebiet hat sich herausgestellt, dass das Amylopektin-Stärkekorn deutlich stabiler als das gewöhnliche Stärkekorn ist. Z.B. zeigt die Amylopektin-Stärke im Vergleich zu Standard-Kartoffelstärke eine um 5°C höher liegende Verkleisterungs-temperatur. Dadurch sind Reaktionen im Slurry effizienter und bei höherer Umsetzungsrate durchführbar.

Zusammensetzung und Eigenschaften von Amylopektin-Kartoffelstärke weichen deutlich von denen der Getreidestärken des Typus "waxy" ab. Amylopektin-Kartoffelstärke hat zum Beispiel einen deutlich niedrigeren Gehalt an gebundenen Lipiden und Proteinen als Wachsgetreidestärken. Geruchs- und Schaumprobleme, wie sie oft beim Einsatz von Wachsgetreidestärken oder deren Derivaten vorkommen, werden beim Einsatz von Kartoffelstärke oder Amylopektin-Kartoffelstärke nicht oder nur selten und in geringerem Ausmaß beobachtet. Im Gegensatz zu Wachsgetreidestärken enthält Amylopektin-Kartoffelstärke chemisch gebundene Phosphatgruppen und besitzt daher spezifische Polyelektrolyteigenschaften.

Stärke in Pigmentierungs- und/oder Streichungsmitteln wird bevorzugt in abgebauter, d.h. depolymerisierter Form eingesetzt. Kleister aus depolymerisierten amylosehaltigen Stärken zeigen eine sehr ausgeprägte Retrogradationsneigung. Unter bestimmten Bedingungen kommt es sogar zum Gelieren des Kleisters. Dieses Verhalten ist eine besonders ungünstige Eigenschaft der üblichen Stärken in der industriellen Beschichtungspraxis. Im Zuge der Forschungen auf diesem Gebiet zeigte es sich nun, dass depolymerisierte Amylopektin-Kartoffelstärke im Vergleich zu den üblich abgebauten Stärkekleistern überraschenderweise eine außerordentlich stabile Viskosität aufweist. Die Verwendung von depolymerisierter Amylopektin-Kartoffelstärke führt zu einer deutlich höheren Stabilität des Mittels, das nun, im Gegensatz zu Beschichtungen mit den üblichen Stärken, auch nach längeren Standzeiten noch einsetzbar und verwendbar ist. Auf eine weitere Derivatisierung der Amylopektin-Kartoffelstärke zur Stabilisierung der Kleisterviskosität kann oftmals verzichtet werden. Der Einsatz von Amylopektin-Kartoffelstärke ist daher sehr umweltfreundlich und ökologisch besonders vorteilhaft.

Durch die deutlich reduzierte Menge bzw. das Fehlen von Amylose in der Amylopektin-Kartoffelstärke kommt es bei der Anwendung der Mitttel zu keinen Ausfällungen von Amylosekristallen, die beim Einsatz von anderen Stärken zu Ablagerungen auf den Auftragssystemen und zu einem schlechteren Laufverhalten des Streichaggregates führen. Der Verlauf der Papierbeschichtung wird störungsfrei und der verminderte Reinigungsaufwand bei längeren Reinigungszyklen der Beschichtungsmaschine stellt einen weiteren wirtschaftlichen und betriebsmäßigen Vorteil dar. Ein besonders günstiges Merkmal der vorliegenden Erfindung liegt darin, dass das neue Mittel ein deutlich verbessertes Laufverhalten aufweist. Durch dieses günstige Laufverhalten wird eine Erhöhung der Auftragsgeschwindigkeit und eine Steigerung der Produktivität der Beschichtungsanlage erreicht.

Die Verwendung von Amylopektin-Kartoffelstärke im Bindemittel der neuen Pigmentierungs- und/oder Streichungsmittel bringt im Vergleich zu herkömmlichen Stärken, wie z.B. Kartoffelstärke, Maisstärke oder Wachsmaisstärke, in den Substanzeigenschaften der damit hergestellten Produkte überraschend ausgeprägte Vorteile, wie z.B. erhöhte Stärkeretention, hervorragende Filmbildung, erhöhte Papierfestigkeit, hohe Bindekraft, geringe Staubbildung, hohen Glanz und hohe Weiße nach dem Satinieren, gleichmäßigere Migration und dadurch reduzierte Druckfleckigkeit (Mottling). Das Bindemittel auf Basis von Amylopektin-Kartoffelstärke bewirkt eine Verbesserung der Rheologie des Beschichtungsmittels.

Aufgrund der überraschend vorteilhaften Eigenschaften der mit dem neuen Mittel hergestellten Produkte kann die Einsatzmenge der Amylopektin-Kartoffelstärke gegenüber herkömmlichen Stärken und Stärkederivaten deutlich reduziert werden. Diese Verminderung kann Ausmaße bis zu 40 %, meist aber bis zu etwa 30 % der bisher eingesetzten Mengen annehmen. Eine solche Herabsetzung der Einsatzmenge um z.B. 30 % bedeutet aber einen Qualitätsvorsprung der Produkte im Vergleich zu mit herkömmlichen Beschichtungsmitteln veredelten Papieren. Daher ist es ein besonders vorteilhaftes Merkmal der vorliegenden Erfindung, dass die neuen Mittel eine bis zu etwa 40 % verringerte Einsatzmenge der Amylopektin-Stärke im Verhältnis zu üblicher Stärke aufweisen.

Für manche Anwendungen ist es vorteilhaft, die Stärke zu derivatisieren. So z.B. unterstützt der Einsatz von hydroxyalkylierten Stärken bei der Veredelung von Papieroberflächen die hydrophoben Eigenschaften des Papiers. Bei der Herstellung der Stärkederivate bewirkt die genannte höhere Kornstabilität des Amylopektins eine vereinfachung der Herstellungstechnologie. Das Amylopektin ist weniger alkali- und weniger temperaturempfindlich als die Amylose. Die herkömmlichen Derivatisierungsreaktionen, wie z.B. Veretherungsund Veresterungsreaktionen, die bevorzugt zur Derivatisierung der Stärke eingesetzt werden, können dadurch bei kürzeren Reaktionszeiten intensiviert und der Einsatz von Verkleisterungsschutzsalzen kann deutlich herabgesetzt werden. Die Einsparung an Reaktionszeit und die deutliche Reduktion der Einsatzchemikalien äußert sich nicht nur wirtschaftlich in verminderten Herstellungskosten, sondern auch in ökologischer Hinsicht. So werden z.B. die Salzfrachten und die CSB-Belastung der Reaktionsabwässer merklich herabgesetzt.

Vorzugsweise liegt die depolymerisierte und derivatisierte Stärke als Diethylaminoethyl-, Hydroxypropyltrimethylammoniumchlorid, Hydroxyethyl-, Hydroxypropyl-, Hydroxypropylsulfonat-, Hydroxybutyl-, Carboxymethyl-, Cyanoethyl-, Carbamoylethylether oder Formyl-, Acetyl-, Propionyl-, Butyryl-, Succinyl-, Octenylsuccinyl-, Sulfonyl-, Sulfat-, Phosphat-, Carbamidester oder als Gemisch hievon vor.

Die für das neue Mittel verwendete Stärke kann als Kochstärke oder als kaltwasserquellbare oder kaltwasserlösliche Stärke eingesetzt werden. Die Verkleisterung bzw. der Aufschluß von granulärer Stärke kann durch gebräuchliche und bekannte Verfahren, wie z.B. Walzentrocknung, Extrusion u.ä. erfolgen. Kaltwasserlösliche abgebaute Amylopektin-Stärke kann mit oder ohne Vorverkleisterung durch Sprühtrocknung hergestellt werden. Zur optimalen Entfaltung der Eigenschaften der Stärke bzw. Stärkederivate für den Einsatz im neuen Mittel ist der Aufschlußgrad von großer Bedeutung.

In einer Variante des neuen Mittels kann die Stärke als Stärke-Pfropfpolymer vorliegen. Vorzugsweise ist die Stärke ein Stärke-Pfropfpolymerisat mit Acrylverbindungen, wie z.B. Acrylamid, Methylmethacrylat, Ethylacrylat, Acrylnitril, oder Vinylverbindung, wie Vinylacetat oder Styrol, oder Butadien oder Mischungen hievon.

Im Rahmen der vorliegenden Erfindung liegen auch Mittel, die native, abgebaute oder derivatisierte Stärken aus anderen pflanzlichen Quellen, Cellulose oder Cellulosederivate, andere Hydrokolloide oder deren Derivate, Proteine oder deren Derivate, synthetische Binder oder Cobinder, natürliche oder synthetische Hilfsmittel, Pigmente, Füllstoffe und weitere für diesen Zweck bekannte Bestandteile enthalten.

Ebenso von der vorliegenden Erfindung umfaßt ist ein Verfahren zur Herstellung von pigmentiertem(r) und/oder gestrichenem(r) Papier, Karton oder Pappe, bei welchem ein oben genanntes Mittel verwendet wird. Das gleiche gilt auch für Papier, Karton oder Pappe, wenn eine Oberfläche derselben durch das genannte Mittel veredelt wurde.

Die folgenden Beispiele erläutern die Vorteile, die durch die erfindungsgemäßen Mittel erreicht werden können.

### Beispiel 1:

In diesem Beispiel wird die Viskostabilität von depolymerisierter Amylopektin-Kartoffelstärke mit depolymerisierter gewöhnlicher Kartoffelstärke und hydroxypropylierter Kartoffelstärke verglichen.

Die Depolymerisierung der Stärken erfolgt durch säurekatalytischen Abbau, dessen Produkte bekanntlich besonders stark zur Retrogradation neigen. Die Herstellung der depolymerisierten Stärken verläuft nach folgendem Verfahren:

Die Stärken werden mit Wasser zu einem Slurry mit 37 Gew.-% Stärke suspendiert. Die Stärkesuspension wird mit 14,3 g 30 %iger Salzsäure/100 g Stärke-Trockensubstanz versetzt und 7 Stunden bei 50°C abgebaut. Am Ende der Reaktionszeit wird die Stärkesuspension abgekühlt und mit Soda neutralisiert, gewaschen, filtriert und getrocknet.

Die hydroxypropylierte Stärke wird durch Reaktion von Stärke mit Propylenoxid bis zu einem Substitutionsgrad von 0,05 hergestellt.

Die Prüfung der Viskosität der depolymerisierten Stärken erfolgte an Hand von 20%igen Stärkesuspensionen, die mit Wasser angerührt und unter Rühren mit dem Magnetrührer 15 min bei 95°C aufgekocht wurden. Die Messung der Viskosität der Kleister erfolgte mit einem Brookfield Rotationsviskosimeter bei 100 Upm nach Abkühlung auf 80°C, 50°C und 25°C und zuletzt nach 1 Stunde Lagerung bei 25°C.

| Viskosität von säurekatalytisch abgebauten Stärken | | | |
|---|---|---|---|
| Viskosität[mPa.s] | Amylopektin-Kartoffelstärke | Kartoffelstärke | hydroxypropylierte Kartoffelstärke |
| 80°C | 36 | 48 | 64 |
| 50°C | 48 | geliert | 96 |
| 25°C | 96 | Gel | 160 |
| nach 1 St. bei 25°C | 120 | Gel | 238 |

Aus diesem Beispiel ist ersichtlich, daß Lösungen von depolymerisierter Amylopektin-Kartoffelstärke eine wesentlich stabilere Viskosität als säureabgebaute Kartoffelstärke bzw. Kartoffelstärkederivate aufweist.

### Beispiel 2

In diesem Beispiel wird eine Reihe von Stärken als Cobinder in einer Streichfarbenrezeptur mit folgender Zusammensetzung untersucht:

| | |
|---|---|
| 80 Teile | Setacarb 75 (OMYA) |
| 20 Teile | Hydrocarb 75 (OMYA) |
| 6 Teile | Stärke |
| 6 Teile | Styronal D708 (BASF) |
| mit NaOH pH-Wert 8,8-9,0 | |

Es wird ein Feststoffgehalt von 65 % mit Wasser eingestellt. Brookfield-Viskosität (25°C, 100 Upm): 800-1200 mPa.s

Die Streichfarben werden mit einem Laborcoater (Lorentzen & Wettre) auf ein holzfreies 80 g/m² Rohpapier gestrichen (Auftragsmenge ca 10 g/m²). Die gestrichenen Papiere werden mittels Phototrockner auf eine Restfeuchtigkeit von 5 % getrocknet. Die gestrichenen Papiere werden mit Hilfe eines Laborkalanders (Kleinewefers) satiniert (60°C, 70 kg/cm², 2 Nips). Die Papiere werden anschließend bei 25°C auf 50 % relative Feuchtigkeit klimatisiert. Die qualitativen Eigenschaften der geprüften Papierstriche sind in folgender Tabelle zusammengefaßt:

| Eigenschaft | Oberfl.-formation | Glanz | Glätte | Trockenrupffestigk. | Naßrupffestigk. | Farbaufnahme | Mottling |
|---|---|---|---|---|---|---|---|
| Amylop.- | +++ | +++ | ++ | +++ | ++ | ++ | +++ |
| kart.st. | | | | | | | |
| Kart.st. | ++ | ++ | ++ | ++ | + | + | + |
| Hydr.prop. | ++ | +++ | ++ | ++ | ++ | ++ | + |
| Kart.st. | | | | | | | |
| Wachsmaisstärke | ++ | ++ | ++ | ++ | + | + | ++ |

| | | | | | | | |
|---|---|---|---|---|---|---|---|
| +++ besonders vorteilhaft ++ vorteilhaft + wenig vorteilhaft | | | | | | | |

Aus diesem Beispiel ist ersichtlich, daß im Vergleich zu anderen Stärken die Verwendung der Amylopektin-Kartoffelstärke als Cobinder in einer Standard-Streichrezeptur besonders vorteilhafte Eigenschaften bezüglich der Qualität des hergestellten Papiers hervorbringt.

## Patentansprüche

1. Pigmentierungs- und/oder Streichungsmittel für Papier, Karton und Pappe, das aus einem Gemisch von Pigmente, einem Bindemittel auf der Basis von Stärke und verschiedenen Hilfsmitteln in wäßrigem Medium besteht, **dadurch gekennzeichnet, dass** die Stärke aus durch Pflanzenveränderungen zur Unterdrückung der Amylosebildung gewonnenen Kartoffeln stammt.

2. Mittel nach Anspruch 1, **dadurch gekennzeichnet, dass** die Kartoffelstärke einen Amylosegehalt von weniger als 20 % hat.

3. Mittel nach Anspruch 1 oder 2, **dadurch gekennzeichnet, dass** die Kartoffelstärke einen Amylosegehalt von 0 % bis 8 % hat.

4. Mittel nach einem der Ansprüche 1 bis 3, **dadurch gekennzeichnet, dass** die Kartoffelstärke einen Amylosegehalt von 0 % bis 3 % hat.

5. Mittel nach einem der Ansprüche 1 bis 4, **dadurch gekennzeichnet, dass** die Stärke eine solche ist, die aus durch molekularbiologische Methoden veränderten Kartoffeln gewonnen wurde.

6. Mittel nach Anspruch 5, **dadurch gekennzeichnet, dass** die Stärke eine solche ist, die aus durch gentechnische Methoden veränderten Kartoffeln gewonnen wurde.

7. Mittel nach einem der Ansprüche 1 bis 6, **dadurch gekennzeichnet, dass** die Stärke in kaltwasserquellender oder kaltwasserlöslicher Form vorliegt.

8. Mittel nach einem der Ansprüche 1 bis 7, **dadurch gekennzeichnet, dass** die Stärke in abgebauter Form vorliegt.

9. Mittel nach einem der Ansprüche 1 bis 8, **dadurch gekennzeichnet, dass** die Stärke durch Säure, Oxidation, enzymatisch, thermisch, thermochemisch oder durch eine Kombination dieser Maßnahmen abgebaut wurde.

10. Mittel nach einem der Ansprüche 1 bis 9, **dadurch gekennzeichnet, dass** die Stärke in derivatisierter Form vorliegt.

11. Mittel nach Anspruch 10, **dadurch gekennzeichnet, dass** die Stärke Ester- und/oder Ethergruppen trägt.

12. Mittel nach Anspruch 11, **dadurch gekennzeichnet, dass** die Stärke als Diethylaminoethyl-, Hydroxypropyltrimethylammoniumsalz, Hydroxyethyl-, Hydroxypropyl-, Hydroxypropylsulfonat-, Hydroxybutyl-, Carboxymethyl-, Cyanoethyl-, Carbamoylethylether oder Formyl, Acetyl-, Propionyl-, Butyryl-, Succinyl-, Octenylsuccinyl-, Sufonyl-, Sulfat-, Phosphat-, Carbamidester oder als Gemisch hievon vorliegt.

13. Mittel nach einem der Ansprüche 1 bis 12, **dadurch gekennzeichnet, dass** die Stärke als Stärke-Pfropfpolymer vorliegt.

14. Mittel nach Anspruch 13, **dadurch gekennzeichnet, dass** die Stärke ein Stärke-Pfropfpolymerisat mit Acrylverbindungen, wie z.B. Acrylamid, Methylmethacrylat, Ethylacrylat, Acrylnitril, oder Vinylverbindungen wie Vinylacetat oder Styrol, oder Butadien oder Mischungen hievon ist.

15. Mittel nach einem der Ansprüche 1 bis 14, das zustätzlich zur nativen, abgebauten und/oder derivatisierten Amylopektin-Kartoffelstärke native, abgebaute oder derivatisierte Stärken aus anderen pflanzlichen Quellen, Cellulose oder Cellulosederivate, andere Hydrokolloide oder deren Derivate, Proteine oder deren Derivate, synthetische Binder oder Cobinder, natürliche oder synthetische Hilfsmittel, Pigmente, Füllstoffe und weitere für diesen Zweck bekannte Zusatzmittel oder Gemische hievon enthält.

16. Verfahren zur Herstellung von pigmentiertem(r) und/oder gestrichenem(r) Papier, Karton oder Pappe, **gekennzeichnet durch** die Verwendung des Mittels nach einem der Ansprüche 1 bis 15.

17. Papier, Karton oder Pappe, dessen (deren) Oberfläche durch das in einem der Ansprüche 1 bis 15 definierte Mittel veredelt wurde.

## Claims

1. A pigmenting and/or coating agent for paper, cardboard and paperboard, said agent consisting of a mixture of pigments, a starch-based binder and different adjuvants in aqueous medium, **characterised in that** the starch originates from potatoes obtained by plant modifications for suppressing formation of amylose.

2. The agent according to claim 1, **characterised in that** the potato starch has an amylose content of less than 20%.

3. The agent according to claim 1 or 2, **characterised in that** the potato starch has an amylose content of from 0% to 8%.

4. The agent according to any one of claims 1 to 3, **characterised in that** the potato starch has an amylose content of from 0% to 3%.

5. The agent according to any one of claims 1 to 4, **characterised in that** the starch is of that type that has been obtained from potatoes modified by means of molecular-biological methods.

6. The agent according to claim 5, **characterised in that** the starch is of that type that has been obtained from potatoes modified by genetically engineering methods.

7. The agent according to any one of claims 1 to 6, **characterised in that** the starch is present in a cold-water-swelling or cold-water-soluble form.

8. The agent according to any one of claims 1 to 7, **characterised in that** the starch is present in degraded form.

9. The agent according to any one of claims 1 to 8, **characterised in that** the starch has been degraded by acid, oxidation, enzymatically, thermally, thermo-chemically, or by a combination of these measures.

10. The agent according to any one of claims 1 to 9, **characterised in that** the starch is present in derivatised form.

11. The agent according to claim 10, **characterised in that** the starch carries ester groups and/or ether groups.

12. The agent according to claim 11, **characterised in that** the starch is present as dietylaminoethyl ether, hydroxypropyl-trimethyl-ammonium salt, hydroxyethyl ether, hydroxypropyl ether, hydroxypropyl-sulphonate ether, hydroxybutyl ether, carboxymethyl ether, cyanoethyl ether, carbamyolethyl ether or formyl, acetyl ester, propionyl ester, butyryl ester, succinyl ester, octenysuccinyl ester, sulphonyl ester, sulphate ester, phosphate ester, carbamide ester, or as a mixture thereof.

13. The agent according to any one of claims 1 to 12, **characterised in that** the starch is present as a starch-graft polymer.

14. The agent according to claim 13, **characterised in that** the starch is a starch-graft polymerisate with acrylic compounds, such as, e.g., acrylamide, methyl methacrylate, ethyl acrylate, acrylonitrile, or with vinyl compounds, such as vinyl acetate or styrene, or butadiene, or mixtures thereof.

15. The agent according to any one of claims 1 to 14, which, additionally to the native degraded and/or derivatised amylopectine potato starch, contains native degraded or derivatised starches from other vegetable sources, cellulose or cellulose derivatives, other hydrocolloids or their derivatives, proteins or their derivatives, synthetic binders or co-binders, natural or synthetic adjuvants, pigments, filling agents, and other additives known for this purpose, or mixtures thereof.

16. A method for producing pigmented and/or coated paper, cardboard or paperboard, **characterised by** the use of the agent according to any one of claims 1 to 15.

17. A paper, cardboard or paperboard which surface has been finished by the agent according to one of the claims 1 to 15.

## Revendications

1. Agent de pigmentation et/ou agent de couchage pour papier, carton et carton-pâte, qui est constitué d'un mélange de pigments, d'un liant à base d'amidon et de différents adjuvants dans un milieu aqueux, **caractérisé en ce que** l'amidon provient de modifications de plantes pour inhiber la formation d'amylose extraite de pommes de terre.

2. Agent selon la revendication 1, **caractérisé en ce que** l'amidon de pomme de terre présente une teneur en amylose inférieure à 20 %.

3. Agent selon la revendication 1 ou 2, **caractérisé en ce que** l'amidon de pomme de terre présente une teneur en amylose de 0 % à 8 %.

4. Agent selon l'une quelconque des revendications 1 à 3, **caractérisé en ce que** l'amidon de pomme de terre présente une teneur en amylose de 0 % à 3 %.

5. Agent selon l'une quelconque des revendications 1 à 4, **caractérisé en ce que** l'amidon est un amidon extrait de pommes de terre modifiées par des procédés de biologie moléculaire.

6. Agent selon la revendication 5, **caractérisé en ce que** l'amidon est un amidon extrait de pommes de terre modifiées par des procédés de génie génétique.

7. Agent selon l'une quelconque des revendications 1 à 6, **caractérisé en ce que** l'amidon est présent sous une forme gonflant dans l'eau froide ou soluble dans l'eau froide.

8. Agent selon l'une quelconque des revendications 1 à 7, **caractérisé en ce que** l'amidon est présent sous une forme cultivée.

9. Agent selon l'une quelconque des revendications 1 à 8, **caractérisé en ce que** l'amidon est cultivé par acide, oxydation, voie enzymatique, thermique, thermochimique ou par une combinaison de ces mesures.

10. Agent selon l'une quelconque des revendications 1 à 9, **caractérisé en ce que** l'amidon est présent sous une forme dérivatisée.

11. Agent selon la revendication 10, **caractérisé en ce que** l'amidon porte des groupes ester et/ou éther.

12. Agent selon la revendication 11, **caractérisé en ce que** l'amidon est présent en tant que sel de diéthylaminoéthylammonium, hydroxypropyltriméthylammonium, hydroxyéthyl éther, hydroxypropyl éther, hydroxypropylsulfonate éther, hydroxybutyl éther, carboxyméthyl éther, cyanoéthyl éther, carbamoyléthyléther ou ester de formyle, ester d'acétyle, ester de propionyle, ester de butyryle, ester de succinyle, ester d'octénylsuccinyle, ester de sulfonyle, ester de sulfate, ester de phosphate, ester de carbamide ou en tant que mélange de ceux-ci.

13. Agent selon l'une quelconque des revendications 1 à 12, **caractérisé en ce que** l'amidon est présent en tant que polymère greffé par amidon.

14. Agent selon la revendication 13, **caractérisé en ce que** l'amidon est un polymérisat greffé par amidon comprenant des liaisons acryle, telles que par exemple l'acrylamide, le méthacrylate de méthyle, l'acrylate d'éthyle, l'acrylonitrile ou des liaisons vinyle telles que l'acétate de vinyle ou le styrène, ou du butadiène ou des mélanges de ceux-ci.

15. Agent selon l'une quelconque des revendications 1 à 4, contenant en plus des amidons de pomme de terre de types amylopectine natifs, cultivés et/ou dérivatisés, ces amidons natifs, cultivés ou dérivatisés provenant d'autres sources végétales, de cellulose ou de dérivés de cellulose, d'autres hydrocolloïdes ou de leurs dérivés, de protéines ou de leurs dérivés, de liant synthétique ou de coliant, d'adjuvant naturel ou synthétique, de pigments, de charges et autres à cette fin des additifs connus ou des mélanges de ceux-ci.

16. Procédé de fabrication de papier, de carton ou de carton-pâte pigmenté(s) et/ou de couchage, **caractérisé par** l'utilisation de l'agent selon l'une quelconque des revendications 1 à 15.

17. Papier, carton ou carton-pâte, dont la (les) surface(s) est (sont) façonnée(s) par l'agent défini dans l'une quelconque des revendications 1 à 15.
